# EUROPEAN PATENT APPLICATION

(11) **EP 4 815 333 A1**
(43) Date of publication of application: **30.09.2026**
(21) Application number: 25165706.0
(22) Date of filing: 24.03.2025
(51) Int. Cl.: H04B 7/185, H04W 4/70, H04L 67/12, H04L 1/00

(54) **METHOD FOR COMMUNICATION WITH AT LEAST ONE IOT-DEVICE THROUGH A NON-TERRESTRIAL NETWORK USING A RELAY**

(71) Applicant: Siemens Aktiengesellschaft, 80333 München (DE)
(72) Inventor: Boriskova, Elizaveta, 80797 München (DE); Magalhães Guimarães, Carlos Eduardo, 69121 Heidelberg (DE); Sauer, Markus, 81739 München (DE); Zeiger, Florian, 85635 Höhenkirchen-Siegertsbrunn (DE)
(74) Representative: Siemens Patent Attorneys

(57) **Abstract**

The present disclosure provides a method for communication with at least one IoT-device through a non-terrestrial network comprising two or more computation nodes. The non-terrestrial network comprises a device shadow of the IoT-device, and the communication is directed to the device shadow of the IoT-device, which relays the communication to and from the IoT-device. The device shadow relays the communication when the IoT-device is in line-of-sight of the non-terrestrial network. Trajectories of the computation nodes are considered for prognosis of line-of-sight periods. The IoT-device switches between communication-less and communication modes based on line-of-sight status. The device shadow and IoT-device aggregate communications. The device shadow may be attributed to one or multiple IoT-devices and maintains device status when out of line-of-sight.

## Description

The invention relates to a method for communication with at least one loT-device (IOTD) through a non-terrestrial network. The Internet of Things (IoT) has revolutionized various industries by enabling the interconnection of physical devices, vehicles, home appliances, and other items embedded with electronics, software, sensors, and network connectivity. These devices collect and exchange data, allowing for improved monitoring, analysis, and control across diverse applications. As loT deployments continue to expand, particularly in industrial and remote settings, new challenges have emerged regarding energy efficiency, connectivity, and data management.

Traditional loT architectures often rely on terrestrial networks for device communication and data transmission. However, in scenarios involving large geographical areas or remote locations, maintaining reliable connectivity can be problematic. Cellular networks may have limited coverage, while satellite communications have historically been expensive and power-intensive for loT applications.

Energy consumption is a major concern for loT devices, especially those deployed in remote or hard-to-reach locations where frequent battery replacement is impractical. Continuous network scanning, data transmission, and processing can quickly deplete power resources, limiting the operational lifespan of these devices. Additionally, the increasing volume of data generated by loT sensors poses challenges for efficient data aggregation, processing, and transmission, particularly in bandwidth-constrained environments.

Existing solutions for loT device management and communication often struggle to balance the trade-offs between data availability, energy efficiency, and cost-effectiveness. Cloud-based approaches may introduce latency and reliability issues for remote deployments, while edge computing solutions can be limited by local processing capabilities and power constraints.

It has been appreciated that a method is needed that overcomes one or more of these problems.

It is therefore the object of the present invention to provide a method for communication with at least one loT-device through a non-terrestrial network that overcomes one or more of these problems.

This object of the present invention is solved with a method for communication with at least one loT-device through a non-terrestrial network with the features contained in claim 1. Advantageous aspects of the invention are contained in the subsequent dependent claims, the following description and the drawing.

In the invention, a method for communication with at least one loT-device through a non-terrestrial network comprising two or more computation nodes is provided. The method comprises using such a non-terrestrial network that comprises a device shadow of the IoT-device, and directing the communication to the device shadow of the loT-device, which relays the communication to and from the loT-device.

The mobility of computation nodes such as satellites in non-terrestrial networks is leveraged to transfer information, requiring uplink/downlink data transfer only when hovering over targeted locations. This approach according to the invention minimizes networking overhead in terms of data transmissions within the satellite network, potentially reducing costs associated with inter-satellite link utilization in pay-per-usage models. The device shadow of the loT-device is preferably always in contact with base stations such as a control center, practically simulating or mimicking the loT-device even in cases, one or many or all of the computation nodes are not in line of sight with the loT-device and thus in no data connection with the loT-device. Thus, for any further data processing solution, the device shadow of the loT-device is preferably a logically and perpetually reachable entity, whereas the loT-device is not always, but plannable or predictable in contact with the device shadow of the loT-device.

In another advantageous aspect of the method according to the invention, the computational nodes are satellites.

Advantageously, in-space computations as easily realizable in non-terrestrial networks provide a significant sustainability benefit. These computations come with no associated cooling costs, making the offloading of data processing to space hardware extremely beneficial from an energy perspective. Particularly the mobility of Low Earth Orbit satellites allows for topology-aware reconnection from devices, which is particularly advantageous as networking is a major energy-intensive process in constrained IoT devices designed for sensing.

Compared to existing technologies, this device shadowing solution offers a more energy-efficient and flexible approach to managing loT devices in mobility scenarios. The system's ability to minimize unnecessary network connections, leverage in-space computing capabilities, and optimize performance based on multiple KPIs provides a significant advantage over traditional loT device management solutions.

The shadow device services can be implemented using various approaches. One implementation method involves utilizing a push/pull concept for data exchange between the shadow device and other system components. This approach allows for flexible and efficient communication, enabling the shadow device to both receive updates from loT devices and provide information to the control center as needed.

Another implementation approach for shadow device services is the use of a shared memory segment on the satellite. This method allows multiple components of the system to access and update the shadow device data efficiently, reducing the need for frequent data transfers between different parts of the system.

Utilizing satellites as computational nodes allows for global coverage and leverages the unique advantages of space-based systems, such as free solar energy and low-cost cooling. Data aggregation and processing on the shadow device preferably attached to satellites contribute to primary energy savings.

In another advantageous aspect of the method according to the invention, trajectories of the computation nodes are considered for prognosis, when the at least one loT-device is in line-of-sight.

By predicting when line-of-sight communication will be possible, the system can optimize scheduling of data transfers and further reduce energy consumption.

In another advantageous aspect of the method according to the invention, the at least one loT-device is switched into a communication-less mode when it leaves line-of-sight and is switched into a communication mode when or after it enters line-of-sight. In another advantageous aspect of the method according to the invention, the device shadow of the loT-device relays the communication to and from the loT-device when the at least one loT-device is in line-of-sight of the non-terrestrial network.

This aspect ensures that communication occurs only when a reliable connection can be established, reducing energy waste from unsuccessful transmission attempts.

This adaptive networking approach significantly reduces energy consumption by disabling communication components when they are not needed.

In another advantageous aspect of the method according to the invention, the device shadow of the at least one loT-device aggregates communication with the at least one loT-device.

Aggregating communication reduces the frequency of data transmissions, leading to energy savings and more efficient use of available communication windows.

When configured to aggregate communication with the loT device, the device shadow collects and processes data from the loT device over time. This aggregation can include storing sensor readings, device states, and other relevant information. The device shadow then communicates this aggregated data to the control center or other system components in a more efficient manner, reducing overall network traffic and energy consumption.

This aspect allows the loT device to optimize its own data transmission, further contributing to energy efficiency.

This method enables particularly efficient and energy-saving communication with loT devices in scenarios where direct, continuous connection may not be possible or practical. The device shadow acts as an intermediary, allowing for persistent connectivity from the perspective of the control center while optimizing the actual communication with the loT device.

In another advantageous aspect of the method according to the invention, the device shadow of the at least one loT-device is attributed to exactly one loT-device. In this configuration, the device shadow maintains a one-to-one relationship with a specific loT device, allowing for dedicated management and representation of that device's state and data. This one-to-one mapping allows for precise management and tailored optimization for individual loT devices.

In another advantageous aspect of the method according to the invention, the device shadow of the at least one loT-device is attributed to two or more loT-devices. This configuration enables a single shadow device to manage and represent multiple loT devices, potentially offering benefits in terms of resource utilization and scalability for large loT device fleets.

This aspect enables efficient management of groups of IoT devices with shared characteristics or requirements.

In another advantageous aspect of the method according to the invention, the device shadow keeps the device status of the at least one loT-device when it leaves the line-of-sight of the non-terrestrial network.

Maintaining device status during periods of non-visibility ensures continuity of operations and allows for seamless resumption of communication when line-of-sight is reestablished.

In a second aspect, a device-shadow configured for carrying out the method according to any of the previous aspects is provided.

This device-shadow implementation enables practical application of the energy-efficient communication method in real-world IoT deployments.

In the following, the invention is described in more details with the help of the drawing, in which:
- Fig. 1: illustrates a schematic block diagram of a device shadowing solution for low-power device fleets in mobility scenarios, according to aspects of the present invention and
- Fig. 2: illustrates a schematic system diagram depicting communication flow in the device shadowing solution according to fig. 1.

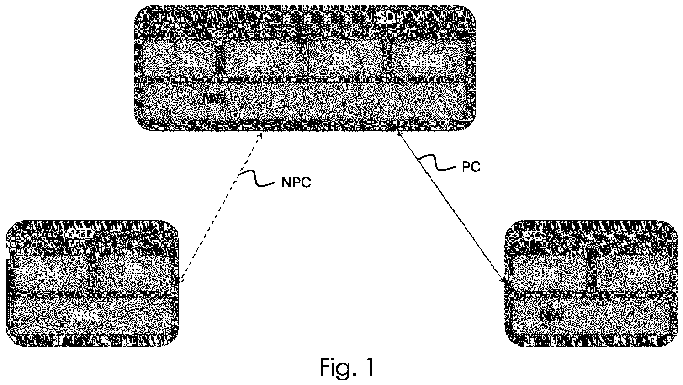

The device shadowing system for low-power device fleets in mobility scenarios comprises several main components as illustrated in Fig. 1. The system includes an loT device/sensor IOTD, a shadow device SD, and a control center CC, each with specific subcomponents designed to enable efficient communication and data management in non-terrestrial network environments.

A shadow device SD is configured to operate in a non-terrestrial network where the computational nodes are satellites. The shadow device SD includes a trajectory component TR for calculating line-of-sight opportunities with the loT device/sensor IOTD. The shadow device SD also comprises a state management component SM for managing device states, a processing component PR for performing data operations, and a shadow state component SHST for maintaining the latest state of connected sensors.

An loT device/sensor IOTD is equipped with a sensing component SE for collecting and potentially aggregating sensor data. The loT device/sensor IOTD also includes a state management component SM for storing and reporting device state, and an adaptive networking sleep component ANS that manages network connections based on scheduled timeouts.

A control center CC serves as the terrestrial data processing terminal and includes a device management component DM for collecting device states and issuing actions. The control center CC also comprises a data aggregation component DA for performing earth-based data processing, and a networking component NW for transmitting actions to devices through satellite connectivity.

The device shadowing system enables a method for communication with at least one loT device/sensor IOTD through a non-terrestrial network comprising two or more computation nodes. In this method, communication is directed to the device shadow of the loT device/sensor IOTD, which relays the communication to and from the loT device/sensor IOTD.

The shadow device SD is in persistent connection PC with the control center CC and logically emulates the loT-device IOTD. The shadow device SD in turn is in non-persistent connection NPC with the loT-Device IOTD. Thus, data is aggregated in order to efficiently use the non-persistent connection NPC, when the computational nodes are in line-of-sight LOS.

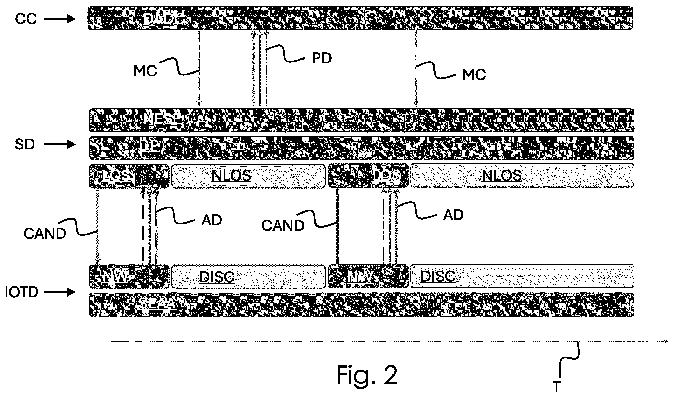

The device shadowing system for low-power device fleets in mobility scenarios utilizes a communication flow between a control center CC, a shadow device SD, and an loT device/sensor IOTD. Fig. 2 illustrates the system diagram depicting this communication flow and the components involved.

A device and data control DADC layer is implemented in the control center CC. The DADC layer interacts with the shadow device SD through management commands MC and processed data PD flows. In data exchange contact with the control center CC a network session NESE layer of the shadow device SD is configured, which acts as an interface of the shadow device towards the control center CC and the network infrastructure.

A data processing DP layer of the shadow device SD is in contact with the network session layer NESE, handling data transmission aspects of the system. As depicted in the diagram, the Shadow device SD is in alternating line of sight LOS and not in line-of-sight NLOS time T slices, representing varying connectivity states between the satellite network and the loT device/sensor IOTD.

A networking NW layer is implemented in the loT-device IOTD and depicted with intermittent blocks, indicating periodic availability of network connections of the loT-device IOTD with the shadow device SD. This layer interacts with the shadow device SD and its upper layers through commands and next connection CAND and aggregated data AD flows.

A sensing and aggregation SEAA layer of the loT-device IOTD indicates sensing and aggregating of sensor data until they can be transferred to the shadow device SD. The system operates along a time T axis.

The shadow device SD considers trajectories of the computation nodes for prognosis of when the loT device/sensor IOTD is in line-of-sight LOS. This allows the system to predict optimal communication slots for the loT device/sensor IOTD, enabling efficient scheduling of connections.

The shadow device SD aggregates communication with the loT device/sensor IOTD. When the loT device/sensor IOTD is in line-of-sight LOS of the non-terrestrial network, the shadow device SD relays communication to and from the loT device/sensor IOTD. This aggregation and relay mechanism optimizes data transmission and reduces energy consumption.

The system utilizes a network digital twin to predict optimal communication slots for the loT device/sensor IOTD. This digital twin model considers the movement of both satellites and the loT device/sensor IOTD to schedule communication links efficiently.

The loT device/sensor IOTD switches into a communication-less mode when leaving line of sight LOS and switches into a communication mode when entering line of sight LOS. This adaptive behavior conserves energy during periods of no connectivity.

The shadow device SD keeps the device status of the loT device/sensor IOTD when the loT device/sensor IOTD leaves the line-of-sight LOS of the non-terrestrial network. This feature ensures that the latest known state of the loT device/sensor IOTD is maintained even during periods of no direct communication.

The system implements modifications of Power Saving Mode PSM in combination with extended Discontinuous Reception eDRX, adapted to desired throughput and downlink properties. These power-saving techniques are reconfigured on every reconnection to optimize energy efficiency while maintaining necessary communication capabilities.

The communication flow in the device shadowing system utilizes both persistent PC and non-persistent connections NPC. Non-persistent connections NPC are established between the loT device/sensor IOTD and the shadow device SD, as well as between the shadow device SD and the control center CC. These non-persistent connections NPC allow for energy-efficient communication while maintaining data availability through the shadow device SD concept.

The shadow device SD acts as a proxy for the loT device/sensor IOTD, enabling asynchronous updates and optimized power management. This architecture allows the control center CC to perceive the loT device/sensor IOTD as always accessible, even when direct communication is not possible due to line-of-sight LOS constraints.

The device shadowing system for low-power device fleets in mobility scenarios offers significant advantages in terms of energy efficiency and overall system performance. By implementing an adaptive networking service in combination with an adaptive sleep mode, the system minimizes energy consumption in several ways.

The system reduces unnecessary network connections by resuming network connections of IoT devices only when a shadow device is in line of sight. This approach prevents devices from establishing connections with all satellites passing over from the same network, thereby cutting down on energy-intensive network scanning and connection processes.

## Claims

1. Method for communication with at least one loT-device (IOTD) through a non-terrestrial network comprising two or more computation nodes, in which such a non-terrestrial network is used that comprises a device shadow (SD) of the loT-device (IOTD), and wherein the communication is directed to the device shadow (SD) of the loT-device (IOTD), which relays the communication to and from the loT-device (IOTD).

2. Method according to the previous claim, wherein the computational nodes are satellites (S3).

3. Method according to one of the previous claims, wherein the device shadow (SD) of the loT-device (IOTD) relays the communication to and from the loT-device (IOTD), when the at least one loT-device (IOTD) is in line-of-sight (LOS) of the non-terrestrial network.

4. Method according to one of the previous claims, wherein trajectories (TR) of the computation nodes are considered for prognosis, when the at least one loT-device (IOTD) is in line-of-sight (LOS).

5. Method according to one of the previous claims, wherein the at least one loT-device (IOTD) is switched into a communication-less mode, when it leaves line-of-sight (LOS) and is switched into a communication mode, when or after it enters line-of-sight (LOS).

6. Method according to one of the previous claims, wherein the device shadow (SD) of the at least one loT-device (IOTD) aggregates communication with the at least one IoT-device (IOTD).

7. Method according to one of the previous claims, wherein the at least one loT-device (IOTD) aggregates communication with the device shadow (SD) of the at least one loT-device (IOTD).

8. Method according to one of the previous claims, wherein the device shadow (SD) of the at least one loT-device (IOTD) is attributed to exactly one loT-device (IOTD).

9. Method according to one of the previous claims, wherein the device shadow (SD) of the at least one loT-device (IOTD) is attributed to two or more loT-devices (IOTD).

10. Method according to one of the previous claims, wherein the device shadow (SD) keeps the device status of the at least one loT-device (IOTD), when it leaves the line-of-sight (LOS) of the non-terrestrial network.

11. Device-shadow (SD) configured for carrying out the method according to one of the previous claims.
